# EUROPEAN PATENT APPLICATION

(11) **EP 2 026 497 A1**
(43) Date of publication of application: **18.02.2009**
(21) Application number: 07764160.3
(22) Date of filing: 04.07.2007
(51) Int. Cl.: H04L 12/16, H04L 12/00

(54) **METHOD, CORRESPONDING SYSTEM AND APPARATUS FOR PROVIDING VALUE-ADDED SERVICE IN INTERNET PROTOCOL TV SYSTEM**

(30) Priority: 08.11.2006 CN 200610138624
(71) Applicant: Huawei Technologies Co., Ltd., Shenzhen, Guangdong Province 518129 (CN)
(72) Inventor: CHEN, Yu, Shenzhen Guangdong 518129 (CN)
(74) Representative: Thun, Clemens
(86) International application number: PCT/CN2007/070231
(87) International publication number: WO 2008/055425

(57) **Abstract**

The invention discloses a method for providing value-added services in an IPTV system, wherein a value added service or a value added service directory is associated with the content provided by IPTV, and a user terminal initiates a request for the value-added service according to the association information. Based on the number of associated value-added services, a value-added service may correspond to a selection ID of the user terminal, may exist in a value-added service root directory associated with the corresponding content, or may exist in a category set in the form of a multi-level directory and the user terminal requests to obtain the link information of the actual value-added service by selecting the directory level by level. The invention also provides an IPTV system, and an IPTV application system and an IPTV user terminal applicable to the IPTV system. The invention allows end users to obtain value-added service information associated with IPTV audio/video programs in real time when using these programs, and thus realizes good interactions between users and played contents.

## Description

This application claims a priority from the Chinese Patent Application No. 200610138624.5, filed on November 8, 2006, and entitled "Method and Corresponding System and Apparatus for Providing Value-Added Service in Internet Protocol TV System", the contents of which are incorporated herein by reference in their entirety.

### Field of the Invention

The present invention relates to an Internet Protocol TV (IPTV) technology, and in particular, to a method and corresponding system and apparatus for providing value-added services in an IPTV system.

### Background of the Invention

IPTV refers to Internet Protocol TV, or Interactive Personal TV. It is a new technology to provide multiple interactive digital media services including digital TV for home users through the Internet Protocol (IP), by using the infrastructure of a broadband network, taking home TV sets or computers as the main terminal equipment, and integrating many technologies such as Internet, multimedia and communication.

A main content provided by IPTV is streaming media service, including live TV (LTV), video on demand (VoD), near VoD (NVoD), and time-shifted TV (TSTV). The emergence of IPTV brings a strong impact on digital TV, however, in terms of the audio/video service, even though the IPTV system enhances the interactive service capability, such as VoD and TSTV, IPTV is at the same service level as digital TV and no apparent capability difference can be seen between the IPTV system and digital TV. Therefore, it has become a trend of development for the IPTV system to fully use the characteristics of the IPTV architecture and integrate IPTV with the traditional interactive value-added services on the Internet such as information browsing, voting and searching, so as to realize far more abundant services than digital TV.

At present, the Internet value-added services provided by a third party can already be browsed through an IPTV set-top box. A user may click a value-added service link on an electronic program guide (EPG) page to make the IPTV user terminal jump to the corresponding value-added service system.

When implementing the present invention, the inventor finds that the foregoing method has at least the following weaknesses: because the value-added service provision mode and the audio/video service content provided by IPTV are relatively independent of each other, users can only view programs passively, and are unable to make interactions with programs such as accessing the corresponding value-added service system in real time, voting, searching for information, and purchasing goods. Therefore, the so-called integration of IPTV multimedia contents and Internet interactive services has not been realized in essence.

### Summary of the Invention

An embodiment of the invention provides a method for providing value-added services in an IPTV system, including: a user terminal sending a request for a value-added service or a value-added service directory to the network, the request carrying association information between the value-added service or the value-added service directory and the content provided by the IPTV system; the network returning link information of the requested value-added service or the value-added service directory to the user terminal according to the association information; the user terminal connecting to the corresponding value-added service system according to the link information of the value-added service, or connecting to the value-added service directory according to the link information of the value-added service directory.

An embodiment of the invention also provides an IPTV system, including a user terminal and an IPTV application system, wherein the user terminal is adapted to send a request for a value-added service or a value-added service directory to the IPTV application system, the request carrying the association information between the value-added service or the value-added service directory and the content provided by the IPTV application system, and connect to the corresponding value-added service system according to the link information of the value-added service returned from the IPTV application system, or connect to the corresponding value-added service directory according to the link information of the value-added service directory returned from the IPTV application system; and the IPTV application system is adapted to return the link information of the value-added service or the value-added service directory to the user terminal according to the association information carried in the request sent by the user terminal.

An embodiment of the invention also provides an IPTV user terminal, including:

a request sending unit, adapted to send a request for a value-added service or a value-added service directory to an IPTV application system, where the request carries association information between the value-added service or the value-added service directory and the content provided by the IPTV application system; and

a service processing unit, adapted to receive from the IPTV application system the feedback to the request sent by the request sending unit, and connect to the corresponding value-added service system according to returned link information of the value-added service or connect to the corresponding value-added service directory according to returned link information of the value-added service directory.

An embodiment of the invention also provides an IPTV application system, including:

a request receiving unit, adapted to receive a request for a value-added service or a value-added service directory sent by a user terminal, where the request carries association information between the value-added service or the value-added service directory and the content provided by the IPTV application system;

an association processing unit, adapted to determine link information of the value-added service or the value-added service directory according to the association information received by the request receiving unit; and

an information feedback unit, adapted to return the link information of the value-added service or the value-added service directory determined by the association processing unit to the user terminal.

The embodiments of the invention adopt the method of associating a value-added service or a value-added service directory with the content provided by IPTV, in which the user terminal initiates a request for the value-added service according to the association information, so that the user terminal can acquire associated value-added service information in real time when enjoying an IPTV audio/video program, and thus the interaction between the user and the played content is realized.

### Brief Description of the Drawings

Figure 1 is a schematic diagram illustrating the procedure of a method for providing value-added services in an IPTV system in accordance with a first embodiment of the invention;

Figure 2 is a schematic diagram illustrating the value-added service association in accordance with a second embodiment of the invention;

Figure 3 is a schematic diagram illustrating the procedure of a method for providing value-added services in an IPTV system in accordance with a second embodiment of the invention;

Fig 4 is a schematic diagram illustrating the operation procedure of the information displaying mode of rolling captions in accordance with a third embodiment of the invention;

Figure 5 is a schematic diagram illustrating the operation procedure of the information displaying mode of active query in accordance with a third embodiment of the invention;

Figure 6 is a schematic diagram illustrating the structure of an IPTV system in accordance with a fourth embodiment of the present invention;

Figure 7 is a schematic diagram illustrating the structure of an IPTV user terminal in accordance with a fifth embodiment of the present invention; and

Figure 8 is schematic diagram illustrating the structure of an IPTV application system in accordance with a sixth embodiment of the invention.

### Detailed Description of the Invention

The embodiments of the present invention provide a method for providing value-added services in an IPTV system, where a value-added service or a value-added service directory is associated with the content provided by IPTV, and a user terminal initiates a request for the value-added service according to the association information. Based on the number of the value-added services associated with the provided content, a value-added service may directly correspond to a selection ID of the user terminal, may exist in a value-added service root directory associated with the corresponding content, or may exist in a category set in the form of a multi-level directory and the user terminal requests to acquire the link information of the value-added service by selecting the directory level by level. In addition, the form and the content of the value-added service requested by the user terminal may be controlled through authorization determination, usage permission control, etc. Moreover, by making statistics of the usage data of the value-added service, data support may be obtained for account reconciliation and account division with the value-added service provider. The association information of the value-added service may be displayed on the user terminal in the mode of rolling captions or displayed upon the user's real-time request. The embodiments of the present invention also provide an IPTV system that applies the foregoing method, as well as an IPTV application system and an IPTV user terminal which are applied to the IPTV system. The method, system and apparatus provided by the embodiments of the present invention will be described in detail hereunder.

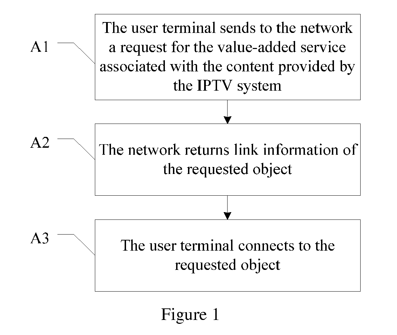

The first embodiment provides a method for providing value-added services in an IPTV system. The procedure of the method is illustrated by Figure 1, including:

A1. The user terminal sends a request for a value-added service or a value-added service directory to the network, the request carrying association information between the value-added service or the value-added service directory and the content provided by the IPTV system.

The mode of associating the value-added service with the content provided by the IPTV system in the embodiment of the present invention allows an end user to send a selection request when listening to or viewing an audio/video program so as to acquire value-added services associated with the program, such as targeted advertising, commodity purchasing, star introduction, audience forum, and associated service; the user may also acquire an information search page to search for user-defined and program-related information on the Internet. IPTV operators may bind the associated value-added service or value-added service directory with the audio/video content provided by them in consideration of their respective business interests and the demands of end users.

To realize the association between the value-added service and the content provided by IPTV, the association information sent by the user terminal may carry a content identification (ID) of the associated content and a user selection ID corresponding to the requested object. The content ID may correspond to different channels or a particular program, so that the operators can introduce different value-added services based on different contents; a selection ID corresponds to a particular content ID, indicating the object selectable by the user; the selection ID may correspond to a particular value-added service or a particular value-added service directory, and the selection ID information is generally provided by the user through a corresponding function button on a set-top box controller; to realize the association between the value-added service and a particular time period of a particular channel/program; the association information may also carry a time ID of the associated content, where the time ID may be provided in the following mode, according to different characteristics of different types of channels/programs.

The time ID is a current playing position, if the associated content is a channel or LTV program; the time ID is a time offset of the current playing position relative to the file header of the VoD program, if the associated content is a VoD program; and the time ID is a current playing position where the time-shifted program is played live, if the associated content is a TSTV.

It is applicable to associate the value-added service information with the audio/video service at an external content integration platform and generate the above-mentioned association parameters; it is also applicable for the IPTV operator to select an associated audio/video content for the value-added service information after the value-added service information is imported into the IPTV system, and obtain the association parameters; in the IPTV system, the association parameters may be shown in the form of extended audio/video program metadata.

The association parameters carried in the request initiated by the user terminal may be uploaded to the network in any communication mode currently applicable to the IPTV system, including: parameters as an HyperText Transfer Protocol (HTTP) request, parameters as a Session Initiation Protocol (SIP) request, parameters as a particular message in a proprietary protocol, and so on.

A2. The network returns to the user terminal the link information of the requested value-added service or the value-added service directory according to the association information in the received request.

The link information generally used is a universal resource identifier (URI) of the requested object. Therefore, the network usually returns the URI of the value-added service or the URI of the value-added service directory corresponding to the association information to the user terminal.

A3. The user terminal establishes a connection according to the received link information; that is, it connects to the corresponding value-added service system if the network returns the URI of the value-added service; or it connects to the value-added service directory if the network returns the link information of the value-added service directory. The user terminal may repeat the afore-mentioned requesting Steps according to the directory, until the user terminal acquires the URI of the actual value-added service.

The basic operation procedure of an embodiment of the invention is described in detail above. In the embodiment of the invention, an IPTV channel/program content may be associated with multiple value-added services, and a value-added service may also be associated with multiple contents; however, the quantity of the selection IDs that can be provided by the user terminal is very limited in the case of direct correspondence (usually, a selection ID corresponds to a function button on a set-top box controller). Therefore, the displaying and provision of value-added services may also be implemented in the mode of a multi-level directory, which is more applicable for the user to select and use the services. The method of providing a value-added service with a 2-level directory will be described in detail according to a next embodiment of the present invention, in combination with practical characteristics. In addition, as a preferred solution, steps set for a better implementation such as authorization determination, usage permission control, and statistics of the usage data of the value-added service are also described in the embodiment of the invention.

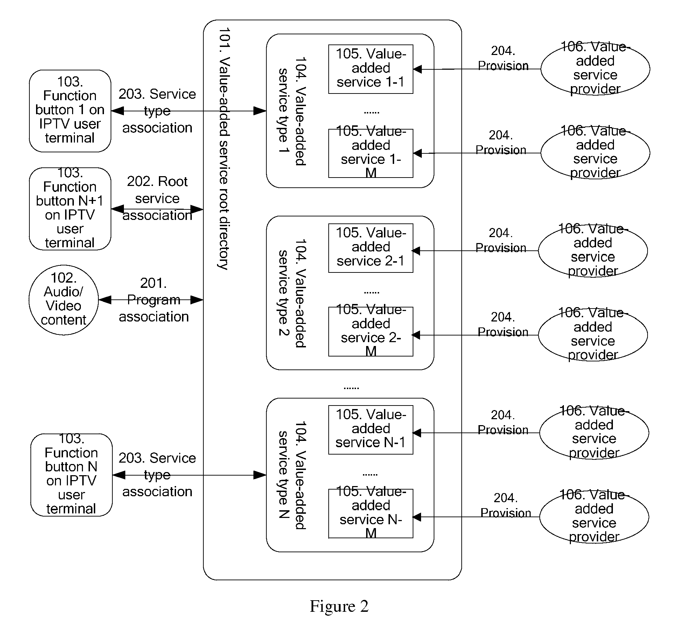

The second embodiment provides a method for providing value-added services in an IPTV system. The schematic diagram of the association of the value-added services in this embodiment is illustrated in Figure 2. In Figure 2, 101 is a value-added service root directory; 102 is the provided content; 103 is a function button on an IPTV user terminal; 104 is a value-added service type; 105 is a value-added service; 106 is a value-added service provider; 201 is a program association; 202 is a root page association; 203 is a service type association; and 204 is a provision relationship.

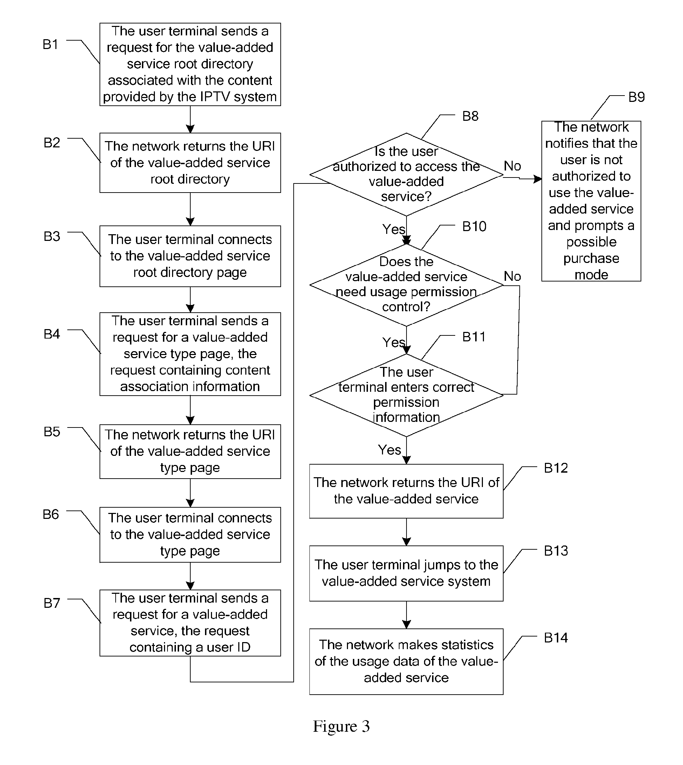

The procedure of the method in accordance with this embodiment is shown in Figure 3, including:

B1. The user terminal sends a request for the value-added service root directory 101 associated with the content provided by the IPTV system, and the request carries a content ID of the associated content, a time ID of the content, and a selection ID corresponding to the value-added service root directory; the association between the value-added service root directory 101 and the provided audio/video content 102 is the program association 201.

Because the selection ID signifies the start of requesting the value-added service and is used rather frequently, if the user terminal is a set-top box, the selection ID can be preset to correspond to a relatively independent function button N+1 of the function buttons 103 on the set-top box controller; the association between the function button N+1 and the value-added service root directory is the root page association 202.

B2. The network returns the URI of the value-added service root directory to the user terminal, according to the association information carried in the received request for the value-added service directory.

B3. The user terminal connects to the value-added service root directory page; the page displays the value-added service type list which is associated with the afore-mentioned content and includes N value-added service types 104. Each item in the list may be construed as a sub-directory in the value-added service root directory.

B4. The user terminal sends to the network a request for a certain value-added service type page, the request carrying the content ID of the associated content, the time ID of the content and the selection ID corresponding to the value-added service type page.

In practice, because the quantity of types of value-added services are not big, each selection ID corresponding to a value-added service type may be preset to correspond to a relatively independent function button 1-N of the function buttons 103 on the set-top box controller; the correspondence between the function button 1-N and each value-added service type 104 is the service type association 203.

It needs to be noted that in the embodiment of the present invention, besides carrying the selection ID corresponding to the value-added service type, the request for the value-added service type may carry the content ID and time ID of the associated content, so that the user terminal may directly acquire the corresponding information page by sending the request for the value-added service type. In this case, the Steps B1-B3 may be omitted, and users may access the value-added service more conveniently and flexibly.

B5. The network returns the URI of the value-added service type page to the user terminal, according to the association information carried in the received request for the value-added service type page.

B6. The user terminal connects to the value-added service type page; the page displays the list that is associated with the afore-mention content and includes M value-added services 105 (for easy understanding, each value-added service type shown in Figure 2 includes M value-added services; in practice, different value-added service types may include a different number of value-added services), each value-added service 105 corresponds to a value-added service provider 106, and the association between the value-added service 105 and the value-added service provider 106 is the provision relationship 204.

B7. The user terminal sends to the network a request for a certain value-added service, the request carrying the ID of the value-added service. In addition, the request also carries a user ID so that the network can perform authorization determination to the user.

B8. The network performs authorization determination to the request for the value-added service according to the user ID. Generally, the authorization determination includes determining whether the user is authorized to access or use the value-added service. The operator may obtain corresponding revenues by authorizing the user to access the value-added service in a certain pay-controlled authorization mode.

For example, the network may associate the value-added service with a particular IPTV service/product by implementing the IPTV application system provided by the embodiments of the present invention. The user may purchase certain rights in the IPTV system or its service support system so as to enjoy the value-added service in the monthly fee mode, or by times, or by limited times. In this mode, a service ID may be adopted to bind the value-added service, and when the user jumps to the value-added service system after authorized by the IPTV application system, the IPTV system needs to generate a corresponding call detail record for the user.

Authorization determination is generally unrelated to the content. Based on the above description of acquiring rights by paying charges, the network performs Step B10 after determining that the user has the right to use the value-added service; otherwise, the network performs Step B9.

B9. The network notifies the user terminal that the user is not authorized to use the value-added service, and prompts a possible purchase mode.

B10. The network determines whether the value-added service needs usage permission control, and if so, performs Step B11, or if not, performs Step B12.

This Step provides a more flexible controlling technique for a user to use a certain value-added service. For example, classification and locking of the value-added service may be combined for the parents to control young children to use the value-added service; if a user's level is lower than the parent controlled level of the value-added service or the value-added service is locked, the network determines that the service needs usage permission control, and requires the user to enter a control password so as to determine whether the current user is authorized to use the value-added service.

B11. The network requires the user terminal to enter permission information which is usually the password preset by the user, and performs Step B12 when determining that the input permission information is true.

B12. The network returns the URI of the value-added service to the user terminal.

B13. The user terminal jumps to the corresponding value-added service system according to the URI of the value-added service returned by the network.

B 14. The network makes statistics of the usage data of the value-added service, the data usually including the usage times of the value-added service.

The statistics of the usage data of the value-added service can provide data support for the IPTV operator to perform account reconciliation and account division with the value-added service provider, so as to obtain reasonable revenues with the value-added service provider.

The third embodiment of the present invention provides a method for providing value-added services in an IPTV system. The method provided by the third embodiment is basically the same as that provided by the second embodiment, and the difference lies in that in the third embodiment of the invention, before the user terminal sends to the network a request for a value-added service root directory or a value-added service type page, two modes of displaying the association information on the user terminal are provided:

First mode: rolling captions

The user terminal receives the channel list or VoD program entry information delivered by the network, and the channel list or the VoD program entry information includes the rolling caption information and its rolling frequency added into each channel, and the rolling caption information carries the correspondence between the value-added service or the value-added service directory and the user selection ID.

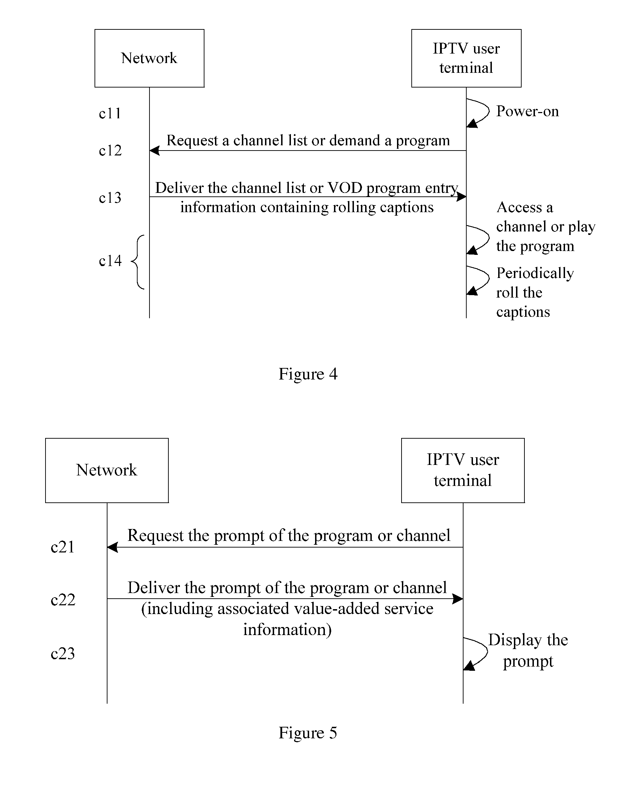

The specific operation procedure in this mode is shown in Figure 4, including:

C11. The IPTV user terminal is powered on.

C12. The IPTV user terminal requests the channel list or demands a program from the network.

C13. The network delivers the channel list or the VoD program entry information carrying rolling captions.

C14. The IPTV user terminal accesses a channel or plays the program, and periodically rolls the captions.

Usually when a user terminal is powered on, the user terminal set-top box acquires the channel list from the network to shorten the channel zapping time. Therefore, the embodiment of the invention adds rolling caption information and its rolling frequency into each corresponding channel by using the channel list, and the caption information may mainly display the correspondence between the value-added service types and the function buttons of the set-top box controller, and other association information may also be included. After accessing a particular channel, the set-top box periodically rolls the caption information according to the frequency defined in the channel list, so that the user may conveniently enjoy the value-added service without the need of memorizing the correspondence between the selection ID and the value-added service/type. In the case of a VoD program, the network may return the rolling caption and its rolling frequency when returning the VoD program entry information. When the program is played, the set-top box periodically displays the caption information in the rolling mode according to the frequency requirement of the rolling captions.

Second mode: active query

The user terminal actively queries the network for the value-added service information associated with the currently played channel or program, where the value-added service information carries the correspondence between the value-added service or the value-added service directory and the user selection ID.

The specific operation procedure of this mode is shown in Figure 5, including:

C21. The IPTV user terminal requests prompt information of the program or channel from the network.

C22. The network delivers the prompt information of the program or the channel to the IPTV user terminal, including the value-added service information associated with the program or the channel.

C23. The IPTV user terminal displays the prompt information on the displaying equipment.

Besides passively receiving value-added service information in the mode of rolling captions, the embodiment of the present invention provides the afore-mentioned active query mode in which the user terminal actively queries the network for the value-added service information associated with the currently played program or channel. Besides the correspondence with the selection ID, the value-added service information may carry the type and introduction of the value-added service associated with the program.

In practice, the afore-mentioned two modes of displaying the value-added service information may be provided alternatively or together.

Hereunder the system and apparatus applicable to the method provided by the embodiments of the invention will be described in detail.

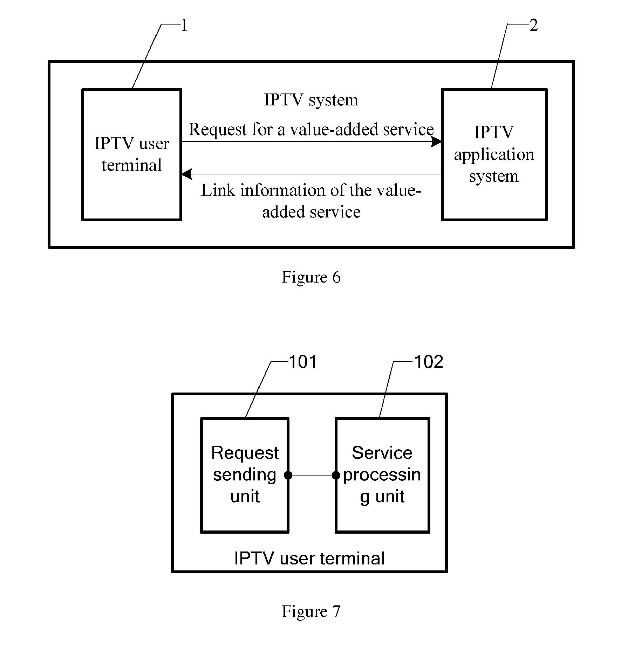

The fourth embodiment provides an IPTV system. As shown in Figure 6, the system includes an IPTV user terminal 1 and an IPTV application system 2.

The IPTV user terminal 1 is adapted to send a request for a value-added service or a value-added service directory to the IPTV application system 2, the request carrying association information between the value-added service or the value-added service directory and the content provided by the IPTV application system 2; and connect to the corresponding value-added service system according to the link information of the value-added service returned by the IPTV application system 2, or connect to the corresponding value-added service directory according to the link information of the value-added service directory returned by the IPTV application system.

The IPTV application system 2 is adapted to return the link information of the value-added service or the value-added service directory to the IPTV user terminal 1, according to the association information carried in the request sent by the IPTV user terminal 1.

The fifth embodiment provides an IPTV user terminal. As shown in Figure 7, the IPTV user terminal includes a request sending unit 101 and a service processing unit 102.

The request sending unit 101 is adapted to send a request for a value-added service or a value-added service directory to an IPTV application system, and the request carries the association information between the value-added service or the value-added service directory and the content provided by the IPTV application system.

The service processing unit 102 is adapted to receive from the IPTV application system the feedback to the request sent by request sending unit 101, and connect to the value-added service system according to the returned link information of the value-added service or connect to the corresponding value-added service directory according to the returned link information of the value-added service directory.

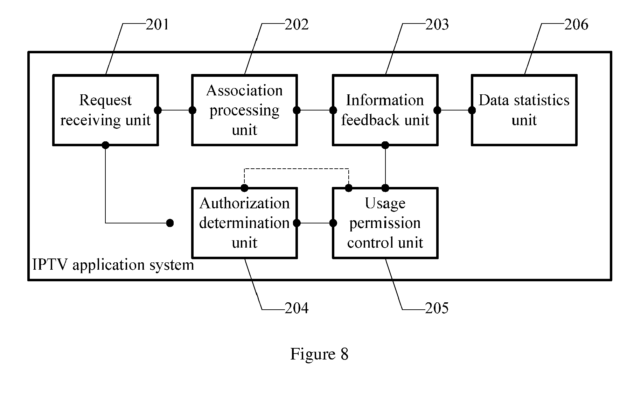

The sixth embodiment provides an IPTV application system, as shown in Figure 8, including:

a request receiving unit 201, an association processing unit 202, and an information feedback unit 203.

The request receiving unit 201 is adapted to receive a request for a value-added service or a value-added service directory sent by a user terminal, and the request carries the association information between the value-added service or the value-added service directory and the content provided by the IPTV application system, and further carries a user ID when the requested object is the value-added service.

The association processing unit 202 is adapted to determine the link information of the value-added service or the value-added service directory according to the association information received by the request receiving unit 201.

The information feedback unit 203 is adapted to return to the user terminal the link information of the value-added service or the value-added service directory determined by the association processing unit. The IPTV application system may further include: an authorization determination unit 204, adapted to perform authorization determination according to the user ID received by the request receiving unit 201, and when determining that the user is authorized to use the value-added service, allow the information feedback unit 203 to return the link information of the value-added service to the user terminal. The IPTV application system may further include: a usage permission control unit 205, adapted to determine whether the value-added service needs usage permission control after the authorization determination unit 204 determines that the user is authorized to use the value-added service, and if the usage permission control is needed, require the user terminal to enter permission information and allow the information feedback unit 203 to return to the user terminal the link information of the requested value-added service when the permission information is judged to be true, or if the usage permission control is not needed, allow the information feedback unit 203 to return to the user terminal the link information of the requested value-added service.

Thus, when the information feedback unit 203 is allowed to return the link information of the requested value-added service to the user terminal, the link information may be directly sent to the information feedback unit 203 (as shown by the dotted line in Figure 8), or may be sent to the usage permission control unit 205 and forwarded by the usage permission control unit 205 after a further judgment.

The IPTV application system may further include a data statistics unit 206, adapted to make statistics of the usage data of the value-added service after the information feedback unit 203 returns the link information of the requested value-added service to the user terminal.

The IPTV user terminal and the IPTV application system provided by the fifth and sixth embodiments may be applied to the IPTV system provided by the fourth embodiment of the present invention.

The above are the detailed descriptions of the method for providing value-added services in an IPTV system and the corresponding IPTV system, IPTV application system and IPTV user terminal provided by the present invention. The exemplary embodiments elaborate on the principle and implementation mode of the invention for easier understanding. It is apparent that those skilled in the art can make various modifications and variations to the invention without departing from the spirit and scope of the invention. The descriptions and embodiments shall not be construed as any limitation to the invention.

## Claims

1. A method for providing value-added services in an Internet Protocol TV (IPTV) system, comprising:
sending, by a user terminal, a request for a value-added service or a value-added service directory to a network, the request carrying association information between the value-added service or the value-added service directory and the content provided by the IPTV system;
returning, by the network, link information of the requested value-added service or the value-added service directory to the user terminal according to the association information; and
by the user terminal, connecting to a corresponding value-added service system according to the link information of the value-added service, or connecting to the value-added service directory according to the link information of the value-added service directory.

2. The method of claim 1, wherein the value-added service directory is a set of next-level sub-directories, and the method further comprises:
after connecting to the value-added service directory, sending, by the user terminal, a request for a next-level sub-directory to the network, wherein the request carries association information between the next-level sub-directory and the content provided by the IPTV system;
returning, by the network, link information of the requested next-level sub-directory to the user terminal according to the association information; and
connecting, by the user terminal, to the next-level sub-directory according to the link information of the next-level sub-directory.

3. The method of claim 1, wherein the value-added service directory is a set of value-added services, and the method further comprises:
after connecting to the value-added service directory, sending, by the user terminal, a request for a value-added service to the network, wherein the request carries the ID of the value-added service;
returning, by the network, link information of the requested value-added service to the user terminal according to the ID of the value-added service; and
connecting, by the user terminal, to the value-added service system according to the link information of the value-added service.

4. The method of claim 3, wherein the request for a value-added service sent by the user terminal carries a user ID; and
before returning the link information of the requested value-added service to the user terminal, the network performs authorization determination according to the user ID, and sends the link information of the requested value-added service to the user terminal after determining that the user is authorized to use the value-added service.

5. The method of claim 4, further comprising: further judging, by the network, whether the value-added service needs usage permission control after determining that the user is authorized to use the value-added service, and
requiring the user terminal to enter permission information, and returning the link information of the requested value-added service to the user terminal after the permission information is judged to be true, if the usage permission control is needed; or
returning the link information of the requested value-added service to the user terminal, if the usage permission control is not needed.

6. The method of any of claims 1 to 5, wherein the association information carries a content ID of the associated content and a user selection ID corresponding to the requested object.

7. The method of claim 6, wherein the association information further carries a time ID of the associated content;
wherein the time ID is a current playing position, if the association content is a channel or live TV (LTV);
wherein the time ID is a time offset of the current playing position relative to the file header of the VoD program, if the association content is a video on demand (VoD); and
wherein the time ID is a current playing position where the TS program is played live, if the association content is a time-shifted TV (TSTV).

8. The method of any of claims 1 to 5, after the network returns the link information of the requested value-added service to the user terminal, further comprising: making statistics of the usage data of the value-added service.

9. The method of any of claims 1 to 5, before the user terminal sends a request for a value-added service or a value-added service directory to the network, further comprising: receiving channel list or VoD program entry information delivered by the network, wherein the channel list or VoD program entry information carries rolling caption information added in each channel and the rolling frequency of the rolling captions, and the rolling caption information includes the correspondence between the value-added service or the value-added service directory and the user selection ID; and/or
querying the network for the value-added service information associated with the currently played channel or program, wherein the value-added service information includes the correspondence between the value-added service or the value-added service directory and the user selection ID.

10. An Internet Protocol TV (IPTV) system, comprising a user terminal and an IPTV application system, wherein:
the user terminal is adapted to send a request for a value-added service or a value-added service directory to the IPTV application system, the request carrying association information between the value-added service or the value-added service directory and the content provided by the IPTV application system; and connect to the value-added service system according to link information of the value-added service returned by the IPTV application system, or connect to the value-added service directory according to link information of the value-added service directory returned by the IPTV application system; and
the IPTV application system is adapted to return the link information of the value-added service or the value-added service directory to the user terminal according to the association information carried in the request sent by the user terminal.

11. An Internet Protocol TV (IPTV) user terminal, comprising:
a request sending unit, adapted to send a request for a value-added service or a value-added service directory to an IPTV application system, the request carrying association information between the value-added service or the value-added service directory and the content provided by the IPTV application system; and
a service processing unit, adapted to receive from the IPTV application system the feedback to the request sent by the request sending unit, and connect to a corresponding value-added service system according to returned link information of the value-added service, or connect to a corresponding value-added service directory according to returned link information of the value-added service directory.

12. An Internet Protocol TV (IPTV) application system, comprising:
a request receiving unit, adapted to receive a request for a value-added service or a value-added service directory sent by a user terminal, the request carrying association between the value-added service or the value-added service directory and the content provided by the IPTV application system;
an association processing unit, adapted to determine the link information of the value-added service or the value-added service directory according to the association information received by the request receiving unit; and
an information feedback unit, adapted to return to the user terminal the link information of the value-added service or the value-added service directory determined by the association processing unit.

13. The IPTV application system of claim 12, further comprising an authorization determination unit, wherein:
the request received by the request receiving unit further carries a user ID; and
the authorization determination unit is adapted to perform authorization determination according to the user ID before the information feedback unit returns the link information of the value-added service to the user terminal, and allow the information feedback unit to return the link information of the value-added service to the user terminal after determining that the user is authorized to use the value-added service.

14. The IPTV application system of claim 13, further comprising:
a usage permission control unit, adapted to determine whether the value-added service needs usage permission control after the authorization determination unit determines that the user is authorized to use the value-added service, and
require the user terminal to enter permission information and return the link information of the requested value-added service to the user terminal after the permission information is judged to be true, if the usage permission control is needed; or
return the link information of the requested value-added service to the user terminal, if the usage permission control is not needed.

15. The IPTV application system of any of claims 12 to 14, further comprising:
a data statistics unit, adapted to make statistics of usage data of the value-added service after the information feedback unit returns the link information of the requested value-added service to the user terminal.
